Europäisches Patentamt

European Patent Office

Office européen des brevets

(11) Veröffentlichungsnummer: **0 133 459**
**B1**

(12) **EUROPÄISCHE PATENTSCHRIFT**

(45) Veröffentlichungstag der Patentschrift:
09.03.88

(51) Int. Cl.⁴: **F 16 L 21/02**

(21) Anmeldenummer: **84106161.7**

(22) Anmeldetag: **30.05.84**

(54) **Dichte und zugfeste Rohrverbindung.**

(30) Priorität: **03.08.83 DE 8322349 U**
**19.03.84 DE 3409982**

(43) Veröffentlichungstag der Anmeldung:
**27.02.85 Patentblatt 85/9**

(45) Bekanntmachung des Hinweises auf die Patenterteilung:
**09.03.88 Patentblatt 88/10**

(84) Benannte Vertragsstaaten:
**AT BE CH DE FR GB IT LI LU NL SE**

(56) Entgegenhaltungen:
**DE - A - 2 726 959**
**DE - B - 2 536 253**
**FR - A - 861 660**
**GB - A - 824 833**
**US - A - 3 445 120**

(73) Patentinhaber: **Firma Carl Freudenberg, Höhnerweg 4,**
**D-6940 Weinheim/Bergstrasse (DE)**

(72) Erfinder: **Bauder, Kurt, Sommergasse 44,**
**D-6940 Weinheim (DE)**

(74) Vertreter: **Weissenfeld-Richters, Helga, Dr.,**
**Höhnerweg 2, D-6940 Weinheim/Bergstrasse (DE)**

ACTORUM AG

**Beschreibung**

Die Erfindung betrifft eine dichte und zugfeste Rohrverbindung der Enden zweier Rohre, die einander in einem radialen Abstand umschliessen mittels eines Dichtringes, welcher einen Grundkörper aus weichelastischem, nicht-kompressiblem Werkstoff, der an den Rohren anliegt sowie einen darin eingebetteten Kegelring aus unnachgiebigem Werkstoff, der in radialer Richtung nach innen und aussen durch Kegelflächen begrenzt ist und bei dem die Kegelflächen gleichsinnig geneigt sind, aufweist.

Auf eine dichte und zugfeste Rohrverbindung der vorgenannten Art nimmt die US-A 3 445 120 Bezug. Der Grundkörper weist dabei ein kreisförmig bzw. ein oval begrenztes Profil auf und die Kegelflächen des Kegelringes einen sich mit zunehmender Entfernung von der Stirnfläche jeweils gegenüberliegenden Rohres einen zunehmend vergrösserten Abstand von demselben. Das Zusammenfügen der Rohre unter Einbeziehung des Ringes setzt daher einen Abrollvorgang voraus, in den eine entsprechende Verformung des Kegelringes einbezogen ist. Der Kegelring ist dementsprechend aus in Längsrichtung schwenkbar verbundenen Einzelelementen zusammengesetzt, und weist weder auf seiner Aussen- noch auf seiner Innenseite eine durchgehend in sich geschlossene Kegelfläche auf. Die Anpressung des Grundkörpers an die abzudichtenden Flächen beruht neben seiner werkstoffeigentümlichen Elastizität ausschliesslich auf dem während der Montage erzielten Verformungsgrad. Die für eine gute Abdichtung erforderliche, hohe Anpressung setzt daher neben der Verwendung eines Gummiwerkstoffes hoher Elastizität ein grosses Übermass voraus, was beides die Montage erschwert. Daneben können grosse Zugbelastungen der erhaltenen Verbindung zu einer Zerstörung des Grundkörpers durch die Einzelelemente des Kegelringes führen und in diesem Zusammenhang nachfolgend zu Undichtigkeiten. Andere Rohrverbindungen, die vollständig aus gummielastischem Werkstoff bestehen, gelangen insbesondere zur Anwendung bei der Verlegung grossformatiger Rohre, beispielsweise bei der Verlegung von Gas-, Wasser- und Abwasserleitungen. Diese werden gewöhnlich aus Einzelrohren zusammengesetzt, die an einem Ende im Bereich eines gewissen Abschnittes zylindrisch erweitert sind. Das nächstfolgende Rohr kann in diesem Abschnitt eingeschoben werden und wird gegenüber dem ersten Rohr abgedichtet durch zusätzliches Einfügen einer solchen Rohrverbindung aus elastischem nachgiebigem Werkstoff. Ein gutes Abdichtungsergebnis wird dadurch allerdings nur dann erzielt, wenn die Rohrverbindung, bezogen auf die Breite des abzudichtenden Spaltes ein erhebliches Übermass aufweist. Das Einfügen wird dadurch erschwert und kann zu einer Beschädigung des Grundkörpers führen, die unter Umständen nicht bemerkt wird.

Der Erfindung liegt die Aufgabe zugrunde, eine Rohrverbindung der vorgenannten Art derart weiterzuentwickeln, dass die beschriebenen Schwierigkeiten nicht mehr auftreten. Die Rohrverbindung soll insbesondere bei vereinfachter Montage eine absolut dichte und zugstabile Verbindung zwischenden aneinander anzuschliessenden Rohren gewährleisten.

Diese Aufgabe wird erfindungsgemäss bei einer Rohrverbindung der eingangs genannten Art dadurch gelöst, dass der Grundkörper mit zylindrisch ausgebildeten Stützflächen an den Rohren anliegt, dass der Kegelring im wesentlichen unnachgiebig ist und dass die den Kegelring begrenzenden Kegelflächen einen Abstand von der Oberfläche des jeweils gegenüberliegenden Rohres haben, der sich mit zunehmender Entfernung von der Stirnfläche zunehmend vermindert.

Die erfindungsgemäss vorgeschlagene Rohrverbindung enthält somit in jedem Falle einen in radialer Richtung unnachgiebigen Kegelring, der so in dem Grundkörper eingebettet ist, dass sich bei einer durch Innendruck und/oder Zugkräfte verursachten Relativbewegung der Rohre keine Verformung der Stirnränder des Grundkörpers ergibt, wie bei der eingangs beschriebenen Ausführung, sondern lediglich eine von der Grösse der Relativbewegung abhängige, radiale Verpressung der zwischen den Kegelflächen und den Rohren vorhandenen Polster des Grundkörpers. Die Erzielung der für ein bestimmtes Abdichtungsergebnis erforderlichen Anpressung wird hierdurch begünstigt und ein ausgezeichnetes Ergebnis in jeder Hinsicht lässt sich bereits unter Verwendung eines sehr weichen Grundkörpers erzielen, der nur ein geringes Übermass gegenüber dem aufnehmenden Spalt aufweist. Die Montage ist dementsprechend einfach.

Der Grundkörper der vorgeschlagenen Rohrverbindung besteht üblicherweise aus Gummi, welches beispielsweise eine Härte Shore A von 55 haben kann. Er lässt sich dadurch in der vorgeschriebenen Richtung gleichermassen leicht in die Mündung des grösseren der beiden Rohre einschieben wie auf den Aussendurchmesser des kleineren der beiden Rohre. Die sich ergebenden Deformierungen erfordern keinen grossen Kraftaufwand. Sie wirken sich ausschliesslich in Richtung des sich kegelig erweiternden Spaltes zwischen dem jeweiligen Rohr und dem Kegelring aus.

In Fällen, in denen das grössere der beiden Rohre durch die in radialer Richtung erweiterte Muffe eines sogenannten Muffenrohres gebildet wird, kann das Muffenrohr bereits mit einer in die Muffe eingesetzten Rohrverbindung auf der Baustelle angeliefert werden.

Der in radialer Richtung erweiterte Muffenabschnitt eines solchen Rohres ist in axialer Richtung rohrseitig durch eine sich in radialer Richtung erstreckenden Fläche begrenzt, was ein unzulässig weites Verrutschen der in die Muffe eingesetzten Rohrverbindung beim Einfügen des anschliessenden Rohres verhindert und auf diese Weise ein Abdichtungs- und Festlegungsergebnis von gleicher Qualität gewährleistet.

Die dem äusseren Rohr zugewandte Kegelfläche schliesst mit der Rotationsachse gewöhnlich einen kleineren Winkel ein als die dem inneren Rohr zugewandte Kegelfläche. Die in radialer Richtung nach aussen wirksame Flächenpressung kann bei entsprechender Abstimmung der Winkelneigungen der Kegelflächen identisch mit derjenigen sein, die in radialer Richtung nach innen im Bereich der Zylinderfläche wirksam ist. Das erzielte Abdichtungs- und Festlegungsergebnis ist daher auf beiden Seiten gleich.

Kostengünstiger lässt sich die vorgeschlagene Rohrverbindung demgegenüber herstellen, wenn die Kegelflächen des Kegelringes eine parallele Erstreckung haben. Ein entsprechender Kegelring lässt sich beispielsweise durch einen Tiefziehvorgang aus einer kreisförmig begrenzten Scheibe aus Stahlblech gewinnen.

Die Kegelflächen schliessen mit der Längsachse zweckmässig einen Winkel von 10–40° ein. Kleinere Winkel bedingen zur Erzielung einer entsprechenden Anpressung eine relativ grosse axiale Verlagerung der beiden Rohre, was nur selten gewährleistet ist. Ist der Winkel demgegenüber grösser, dann genügen zum Aufbauen der gewünschten Anpressung relativ kleine Verlagerungen.

Nach einer vorteilhaften Ausgestaltung ist es vorgesehen, dass die innere Stützfläche des Grundkörpers in Richtung der Stirnfläche des inneren Rohres verlängert ist und dass der axial über den Kegelring vorspringende Teil vor dem Einfügen des Rohres einen Innendurchmesser aufweist, der kleiner ist als der Aussendurchmesser des Rohres. Die innere Stützfläche kann bei einer solchen Ausführung ohne Vorspannung an der Oberfläche des Rohres anliegen, was dessen Einfügen bis zum Erreichen des axial über den Kegelring vorspringenden, verengten Teiles stark erleichtert. Auch dieser Teil kann indessen durch weiteres Vorschieben des Rohres leicht passiert werden insofern, als der Teil in radialer Richtung nicht abgestützt ist und insofern in radialer Richtung leicht aufweitbar ist.

Eine entsprechende Aufweitung des vorspringenden Teiles erweist sich besonders dann als sehr leicht realisierbar, wenn der vorspringende Teil in radialer Richtung nur eine sehr geringe Dicke aufweist und beispielsweise durch eine Ringmembrane gebildet wird. Diese schmiegt sich nach der elastischen Aufweitung durch das Rohr besonders dicht an dessen Oberfläche an und gewährleistet auf diese Weise einen ausgezeichneten flüssigkeitsdichten Anschluss des Rohres.

Wird auf die Verbindungsstelle zwischen den beiden Rohren eine axiale Zugbeanspruchung ausgeübt, so wird die Zugbeanspruchung über die Ringmembrane auf den radial innerhalb des Kegelringes gelegenen Teil des Grundkörpers übertragen, was dazu führt, dass der Grundkörper zunehmend in den sich in Kraftrichtung verengenden Spalt zwischen dem Inneren der beiden Rohre und dem Kegelring gepresst wird. Der Grundkörper besteht indessen aus einem inkompressiblen Material. Eine axiale Verlagerung des Inneren der beiden Rohre relativ zu dem Kegelring in Kraftwirkungsrichtung ist daher nur in kleinstem Masse möglich. Die erzielte axiale Festlegung und Abdichtung des Inneren der beiden Rohre relativ zu dem Ring ist demzufolge ausgezeichnet.

Die Rohrverbindung vermag sich bei einer entsprechenden Krafteinleitung auch nicht relativ zu dem äusseren der beiden Rohre zu verlagern. In diesem Falle bewirken die in entgegengesetzter Richtung an dem Kegelring und dem äusseren Rohr angreifenden Kräfte eine radiale Verpressung des radial ausserhalb des Kegelringes liegenden Teiles der Rohrverbindung in dem sich kegelig verjüngenden Spalt zwischen dem äusseren Rohr und dem Kegelring. Auch zwischen dem äusseren Rohr und der Rohrverbindung wird dadurch eine ausgezeichnete Festlegung sowie ein gutes Abdichtungsergebnis erzielt.

Eine entsprechende Wirksamkeit ergibt sich auch dann, wenn die Verbindungsstelle zwischen den beiden Rohren einer Zugbeanspruchung nicht ausgesetzt ist. Wenn indessen die Stirnfläche der Rohrverbindung durch den Druck des abgedichteten Mediums belastet ist, beispielsweise den Druck einer Flüssigkeit oder eines Gases. In diesem Falle ergibt sich nämlich eine hydrostatische Aufteilung der Stirnfläche in zwei Bereiche von entgegengesetzter Wirksamkeit. Eine Druckbeaufschlagung nur des ersten dieser beiden Bereiche würde zur Undichtigkeit führen und es handelt sich bei diesem Bereich um die Fläche, die radial ausserhalb des auf die Stirnfläche projizierten Kegelringes liegt. Bei dem zweiten Bereich handelt es sich um die radiale innerhalb des vorstehend angesprochenen Bereiches liegende Restfläche. Eine Druckbeaufschlagung dieses Bereiches führt zur Anpressung der Zylinderflächen des Grundkörpers an die Wandungen der Rohre und damit zur Erzielung eines guten Abdichtungsergebnisses.

Da der letztgenannte Bereich flächenmässig stets grösser ausgelegt ist als der erstgenannte Bereich, wird dessen schädigende Wirkung stets übertroffen und ein gutes Abdichtungsergebnis auch bei fehlender Zugbeanspruchung der Verbindung stets erzielt. Der kleinste gegenseitige Abstand zwischen einer jeden Kegelfläche und der zugewandten Rohrwandung ist demgemäss möglichst gering zu wählen.

Eine Beschädigung der Ringmembrane durch das innere Rohr lässt sich leicht vermeiden, wenn die Wandstärke der Ringmembrane gleichmässig in die grössere Wandstärke des Grundkörpers übergeht. Zusätzlich kann das einzuschiebende Rohr in seinem vorderen Ende mit einer kegeligen Anschrägung oder ggf. einer leichten Abrundung versehen werden.

Nach einer vorteilhaften Ausgestaltung ist es vorgesehen, dass die äussere Stützfläche des Grundkörpers in Richtung der Stirnfläche des äusseren Rohres verlängert ist und dass der axial über den Kegelring vorspringende Teil vor dem Einfügen in das Rohr einen Aussendurchmesser aufweist, der grösser ist als der Innendurchmesser des Rohres. Der übrige Teil der Stützfläche braucht in diesem Falle nicht mehr grösser ausgeführt zu werden als der Innendurchmesser des Rohres, was das Einfügen der Rohrverbindung stark erleichtert. Der vorspringende Teil kann ggf. wulstartig ausgebildet sein.

In der Zeichnung sind einige beispielhafte Ausführungen der vorgeschlagenen Rohrverbindung dargestellt. Sie werden nachfolgend näher erläutert.

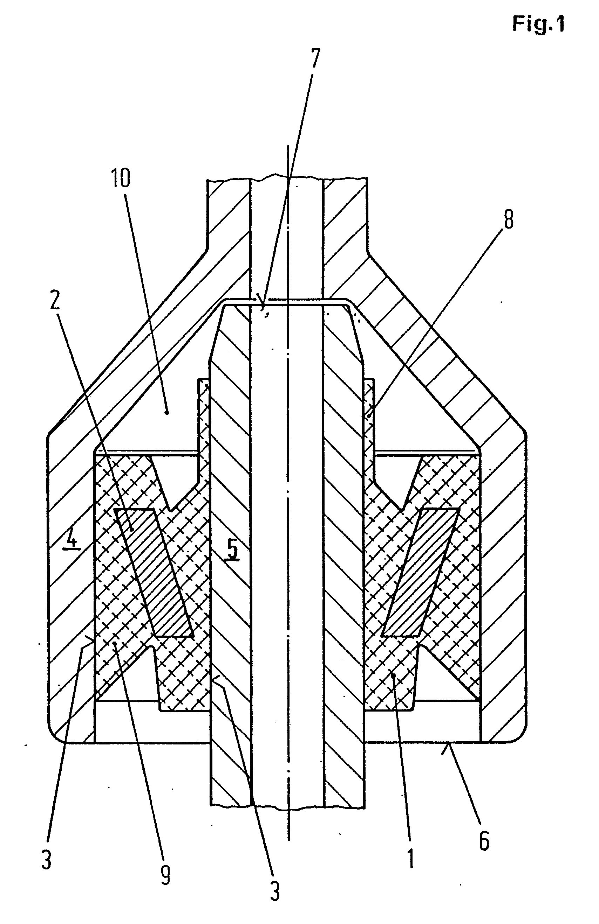

Die Rohrverbindung in dem gezeigten Ausführungsbeispiel nach Fig. 1 dient zur flüssigkeitsdichten und zugfesten Verbindung der gradlinig aufeinanderstossenden Enden zweier Rohre. Das äussere der beiden Rohre ist im Bereich des Endes in radialer Richtung aufgeweitet und umschliesst das innere der beiden Rohre dadurch in diesem Bereich in einem radialen Abstand. In den so gebildeten Spalt ist die erfindungsgemäss vorgeschlagene Rohrverbindung eingefügt. Diese umfasst den Grundkörper aus weichelastischem Gummi, der in radialer Richtung nach innen und nach aussen durch die Stützflächen 3 begrenzt ist. Letztere liegen unter einer geringen elastischen Vorspannung an den einander zugewandten Oberflächen der Rohre 4, 5 an.

In den Grundkörper 1 ist der aus Metall bestehende Kegelring 2 fest einvulkanisiert. Dieser ist auf der Innenseite und auf der Aussenseite durch sich parallel zueinander erstreckende Kegelflächen begrenzt, wobei der Abstand von der Oberfläche des jeweils gegenüberliegenden Rohres sich mit zunehmender Entfernung von dessen Stirnfläche vermindert. Der kleinste Abstand ist dabei in beiden Fällen identisch.

Der Grundkörper ist auf der Innenseite mit der in axialer Richtung vorspringenden Ringmembrane 8 versehen, auf der Aussenweite mit dem in axialer Richtung vorspringenden Ringwulst 9. Sowohl die Ringmembrane 8 als auch der Ringwulst 9 liegen unter einer elastischen Vorspannung einer jeweils zugeordneten Oberfläche des angrenzenden Rohres an.

Funktionell ist zu der vorstehend beschriebenen Verbindung folgendes anzuführen:

Wird auf die Rohrverbindung eine entgegengesetzt gerichtete axiale Zugkraft ausgeübt, dann führt diese zu einer radialen Verpressung des Grundkörpers 1 einerseits zwischen dem äusseren Rohr 4 und dem Kegelring 2 sowie andererseits zwischen dem Kegelring 2 und dem inneren Rohr 5. Sowohl der Kegelring als auch die beiden Rohre bestehen aus unnachgiebigen Materialien, ein Ausweichen in radialer Richtung ist daher nicht möglich.

Der Grundkörper besteht aus weichelastischem, indessen nicht kompressiblem Werkstoff. Er vermag sich daher über eine absolut dichte Anlage hinausgehend nicht weiter zu verformen, was schliesslich dazu führt, dass eine weitergehende axiale Entfernung der beiden Rohre 4, 5 voneinander nicht mehr möglich ist.

Die Einleitung von Zugkräften kann insofern nicht zum Lösen der Verbindung führen.

Daneben führt die hochgradige, radiale Verpressung des Grundkörpers 1 zwischen den einander zugewandten Oberflächen der Rohre 4, 5 zur Erzielung eines ausgezeichneten Abdichtungsergebnisses. Flüssigkeiten und Gase vermögen daher den Dichtspalt zwischen beiden Rohren nicht mehr zu passieren.

Ein gutes Abdichtungsergebnis im Dichtspalt ist indessen auch dann gewährleistet, wenn die vorstehend im einzelnen beschriebene Verbindung in axialer Richtung nicht vorbelastet ist. Der Druck in dem Ringraum 10 entspricht in diesem Falle dem Druck des abgedichteten Mediums und wird dadurch auf die Stirnfläche des Ringes übertragen. Die auf diese projizierte radiale Gesamterstreckung des Kegelringes ist indessen bereits grösser als die radial ausserhalb verbleibende Restfläche, weshalb der Druck nicht zu einer axialen Verschiebung des Grundkörpers führen kann, sondern lediglich zu einer radialen Verpressung des Grundkörpers zwischen den einander gegenüberliegenden Oberflächen. Der Effekt wird durch den innerhalb der vorstehend angesprochenen Fläche an den Grundkörper angreifenden Druck zusätzlich verstärkt.

Die Gestalt des Grundkörpers ist dem Dichtspalt angepasst und folgt insofern dem Querschnittsprofil der zu verbindenden Rohre.

Neben runden Ausführungen sind daher ovale und polygonförmige Ausführungen möglich.

Die Figuren 2 bis 5 und die Figur 7 nehmen Bezug auf modifizierte Ausführungen der vorgeschlagenen Rohrverbindung. Der Grundkörper ist in allen Fällen im wesentlichen gleich ausgebildet. Er enthält indessen einen Kegelring einer unterschiedlichen Gestalt.

Bei der Ausführung nach Figur 2 verkleinert sich der Winkel zwischen der äusseren und der inneren Kegelfläche und der Längserstreckung der Rohre 4, 5 mit zunehmender Entfernung von deren Stirnfläche stetig. Das Profil des Kegelringes ist dadurch in etwa linsenförmig begrenzt. Eine entsprechende Ausführung eignet sich insbesondere für Anwendungen, in denen neben einer grossen Zugbelastung kleinere Winkelverlagerungen zwischen den aneinander anzuschliessenden Rohren auftreten können.

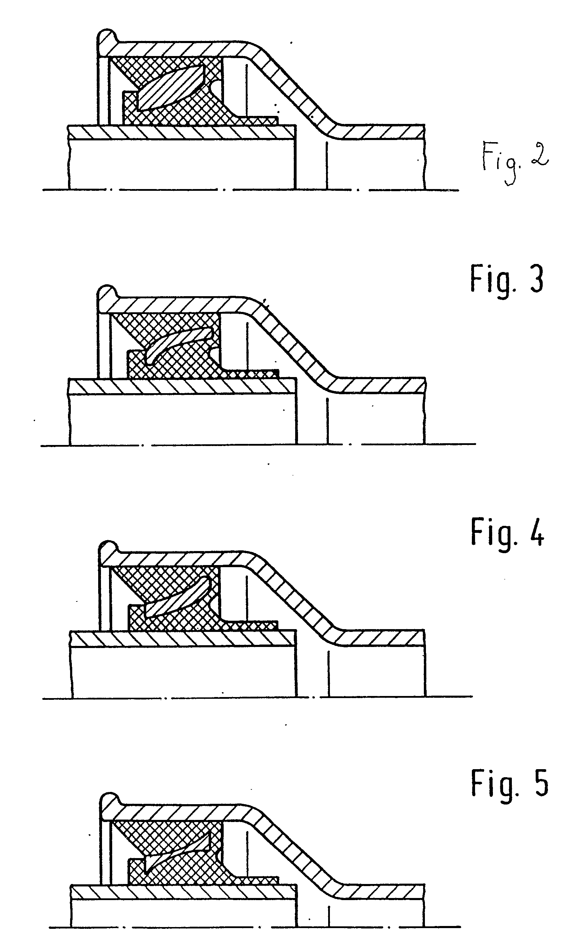

Die in Figur 3 gezeigte Ausführung ist der vorstehend beschriebenen ähnlich. Die dem inneren Rohr 5 zugewandte Kegelfläche des Kegelringes 2 weist in diesem Falle indessen eine konkave Auswölbung auf, wodurch die eingeleiteten Drücke noch besser für die erwünschte radiale Verpressung des Grundkörpers zwischem dem Kegelring und dem inneren Rohr 5 nutzbar gemacht werden können. Eine entsprechende Ausführung eignet sich daher besonders gut, wenn der Aussendurchmesser des einzuschiebenden Rohres 5 in stärkerem Masse variieren kann.

Die Ausführung nach Figur 4 ist inhaltlich aus den Ausführungen nach den Figuren 2 und 3 abgeleitet. Das Profil des Kegelringes 2 ist in diesem Falle auf der Aussenseite konkav, auf der Innenseite konvex begrenzt.

Der Innendurchmesser des aufzuschiebenden Rohres 4 kann dadurch in stärkerem Masse vom Normalwert abweichen, während sich zugleich die Möglichkeit ergibt, Winkelverlagerungen zwischen den aneinander anzuschliessenden Rohren in besserem Masse auszugleichen. Der Kegelring 2 besteht in diesem Falle ebenso wie bei der Ausführung nach Figur 3, aus tiefgezogenem Stahlblech. Die beiderseitigen Kegelflächen haben dadurch einen parallelen Verlauf, wobei Bereiche einer unterschiedlichen Neigung gleichmässig ineinander übergehen.

Das Profil des Kegelringes nach Figur 5 ist in radialer Richtung nach aussen und in radialer Richtung nach innen gleichermassen konkav ausgewölbt. Der Winkel, den die beiden Kegelflächen mit der Längserstreckung der zueinander verbindenden Rohre einschliessen, erfährt demzufolge mit zunehmender Entfernung von deren Stirnflächen 6, 7 eine progressive Steigerung. Der Innendurchmesser des Rohres 4 kann dadurch ebenso wie der Aussendurchmesser 5 in weitem Masse variiert sein, was die Herstellkosten für entsprechende Rohre vermindert.

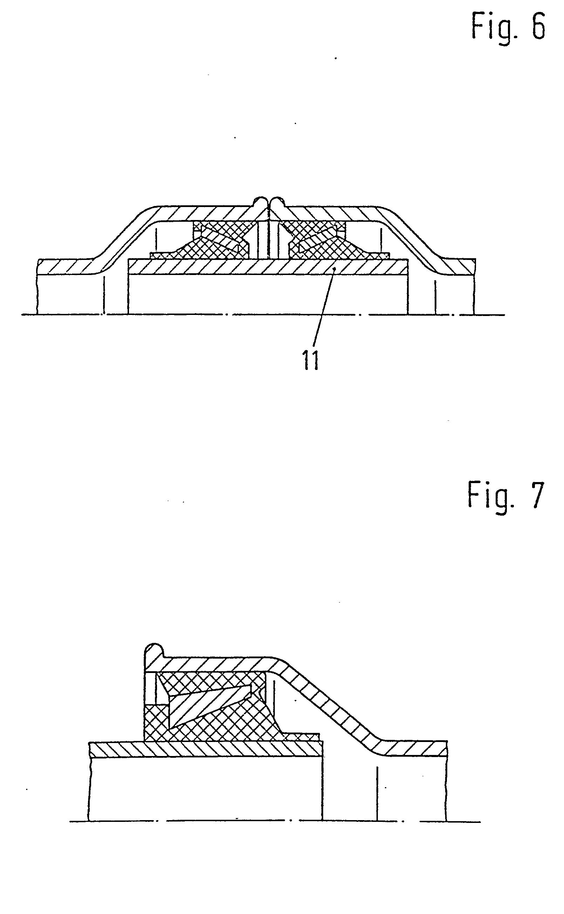

Figur 6 nimmt Bezug auf eine Anwendung der vorgeschlagenen Rohrverbindung in einer Verbindung, in der die zwei Rohre einander nicht überlappen, sondern durch ein die Stossstelle überlappendes Hilfsrohr verbunden sind. Die Rohre und das Hilfsrohr haben eine gemeinsame Achse, wobei in dem so gebildeten Spalt beiderseits der Stossstelle jeweils eine Rohrverbindung angeordnet ist. Beide Rohrverbindungen sind einander spiegelbildlich zugeordnet. Das Hilfsrohr und die Rohre werden hierdurch gegenseitig abgedichtet und festgelegt.

Figur 7 nimmt Bezug auf eine Ausführung, bei der das Profil des Kegelringes aussen- und innenseitig linear begrenzt ist.

Die innere Kegelfläche schliesst mit der Erstreckung der zu verbindenden Rohre einen grösseren Winkel ein als die äussere Kegelfläche, wobei die beiderseitigen Neigungen so gewählt sind, dass die spezifisch erzielte Flächenpressung trotz des Durchmesserunterschiedes aussen- und innenseitig gleich ist.

Für die Funktion der vorgeschlagenen Rohrverbindung ist von wesentlicher Bedeutung, dass der Kegelring unnachgiebig ist. Das bevorzugte Material ist deshalb Stahl, es können jedoch auch andere Materialien in die Überlegungen einbezogen werden, beispielsweise durch mineralische Fasern verstärkte Kunststoffe oder Hart-PVC.

Der Kegelring ist im allgemeinen mit dem Grundkörper fest verbunden, was beispielsweise auf adhäsive Weise erfolgen kann. Die Robustheit ist in diesem Falle ganz ausgezeichnet. Sie begünstigt eine Verwendung der vorgeschlagenen Rohrverbindung auf Baustellen.

Ausführungen, bei denen der Kegelring ohne feste Bindung in den Grundkörper eingebettet ist, sind möglich. Sie haben den Vorteil einer besonders günstigen Aktivierung radial gerichteter Kräfte im Bereich der axialen Erstreckung des Kegelringes, was wichtig ist in bezug auf die erwünschte Festlegung und Abdichtung der zueinander verbindenden Rohre. Um dabei zu verhindern, dass der Kegelring bei unsachgemässer Handhabung verloren geht, ist es indessen zweckmässig, wenn der Kegelring in axialer Richtung beiderseits von dem Grundkörper umschlossen ist. Ein zusätzlicher Korrosionsschutz bei Verwendung eines korrosionsgefährdeten Materials ergibt sich hierbei als zusätzlicher Vorteil. Die beiden Kegelflächen können, unabhängig von der speziellen Ausführung im Bereich des kleinsten Abstandes der jeweils zugeordneten Rohrwandung sehr dicht angenähert sein. Die Sicherheit gegen ein unbeabsichtigtes Lösen bei einer Beaufschlagung nur mit fluidischem Druck lässt sich hierdurch verbessern. Der Wert kann etwa 0,3 bis 10 mm betragen und ist massgeblich von der radialen Erstreckung des Spaltes sowie der speziellen Nachgiebigkeit des für die Herstellung des Grundkörpers verwendeten Materials abhängig.

**Patentansprüche**

1. Dichte und zugfeste Rohrverbindung der Enden zweier Rohre (4, 5), die einander in einem radialen Abstand umschliessen, mittels eines Dichtringes, welcher einen Grundkörper (1) aus weichelastischem, nicht kompressiblem Werkstoff, der an den Rohren (4, 5) anliegt sowie einen darin eingebetteten Kegelring (2) aus unnachgiebigem Werkstoff, der in radialer Richtung nach innen und aussen durch Kegelflächen begrenzt ist und bei dem die Kegelflächen gleichsinnig geneigt sind, aufweist, dadurch gekennzeichnet, dass der Grundkörper (1) mit zylindrisch ausgebildeten Stützflächen (3) an den Rohren (4, 5) anliegt, dass der Kegelring (2) im wesentlichen unnachgiebig ist und dass die den Kegelring (2) begrenzenden Kegelflächen einen Abstand von der Oberfläche des jeweils gegenüberliegenden Rohres (4, 5) haben, der sich mit zunehmender Entfernung von dessen Stirnfläche (6, 7) zunehmend vermindert.

2. Rohrverbindung nach Anspruch 1, dadurch gekennzeichnet, dass die radial äussere Kegelfläche des Kegelringes (2) mit der Längsachse der Rohre (4, 5) einen kleineren Winkel einschliesst als die radiale innere Kegelfläche.

3. Rohrverbindung nach Anspruch 1, dadurch gekennzeichnet, dass die äussere und innere Kegelfläche des Kegelringes (2) eine parallele Erstreckung haben.

4. Rohrverbindung nach einem der Ansprüche 1 bis 3, dadurch gekennzeichnet, dass der Winkel zwischen der radial äusseren und/oder der radial inneren Kegelfläche des Kegelringes (2) und der Längserstreckung der Rohre (4, 5) mit zunehmender Entfernung von deren Stirnfläche (6, 7) stetig vergrössert.

5. Rohrverbindung nach einem der Ansprüche 1 bis 3, dadurch gekennzeichnet, dass sich der Winkel zwischen der radial äusseren und/oder der radial inneren Kegelfläche des Kegelringes (2) und der Längserstreckung der Rohre (4, 5) mit zunehmender Entfernung von deren Stirnfläche (6, 7) stetig verkleinert.

6. Rohrverbindung nach einem der Ansprüche 4 bis 5, dadurch gekennzeichnet, dass die stetige Winkeländerung einer jeden radialen Begrenzungsfläche zur Längserstreckung der Rohre (4, 5) gleichmässig ist.

7. Rohrverbindung nach einem der Ansprüche 1 bis 6, dadurch gekennzeichnet, dass die radialen Begrenzungsflächen und die Längsachse einen Winkel von 10 bis 40° einschliessen.

8. Rohrverbindung nach einem der Ansprüche 1 bis 7, dadurch gekennzeichnet, dass die innere Stützfläche des Grundkörpers (3) in Richtung der Stirnfläche (7) des inneren Rohres (5) verlängert ist und dass der axial über dem Kegelring vorspringende Teil (8) vor dem Einfügen des Rohres (5) einen Innendurchmesser aufweist, der kleiner ist als der Aussendurchmesser des Rohres (5).

9. Rohrverbindung nach Anspruch 8, dadurch gekennzeichnet, dass der vorspringende Teil (8) als Ringmembran ausgebildet ist.

10. Rohrverbindung nach Anspruch 9, dadurch gekennzeichnet, dass die Ringmembran und der Grundkörper (1) mit gleichmässig zunehmender Wandstärke ineinander übergehen.

11. Rohrverbindung nach einem der Ansprüche 1 bis 10, dadurch gekennzeichnet, dass die äussere Stützfläche (3) des Grundkörpers (1) in Richtung der Stirnfläche (6) des äusseren Rohres (4) verlängert ist und dass der axial über den Kegelring (2) vorspringende Teil vor dem Einfügen in das Rohr (4) einen Aussendurchmesser aufweist, der grösser ist als der Innendurchmesser des Rohres (4).

12. Rohrverbindung nach Anspruch 11, dadurch gekennzeichnet, dass die Verlängerung (9) der äusseren Stützfläche als Wulst ausgebildet ist.

**Claims**

1. Tight and tension-proof pipe connector for the ends of two pipes (4, 5) which engage one another with a radial separation, comprising a sealing ring which has a base body (1) of flexible, incompressible material which restes againts the pipes (4, 5), and also a frusto-conical ring (2) of inflexible material which is embedded therein and is defined on its inside and its outside in the radial direction by inclined surfaces inclined in the same direction, characterized in that the base body (1) rests against the pipes (4, 5) with supporting surfaces (3) of cylindrical configuration, that the frusto-conical ring (2) is essentially inflexible, and that the inclined surfaces defining the frusto-conical ring (2) are spaced from the surfaces of the respectively opposite pipes (4, 5) by distances which continuously decrease with increasing distance from the end faces (6, 7) of the pipes.

2. A pipe connector according to claim 1, characterized in that the radially outer inclined surface of the frusto-conical ring (2) encloses a smaller angle with the longitudinal axis of the pipes (4, 5) than the radially inner inclined surface.

3. A pipe connector according to claim 1, characterized in that the outer inclined surface and the inner inclined surface of the frusto-conical ring (2) are parallel to one another.

4. A pipe connector according to one of claims 1 to 3, characterized in that the angle(s) between the radially outer and/or the radially inner inclined surface of the frusto-conical ring (2) and the longitudinal axes of the respective pipes (4, 5) increases continuously with increasing distance from their end faces (6, 7).

5. A pipe connector according to one of claims 1 to 3, characterized in that the angle(s) between the radially outer and/or the radially inner inclined surface of the frusto-conical ring (2) and the longitudinal axes of the respective pipes (4, 5) decreases continuously with increasing distance from their end faced (6, 7).

6. A pipe connector according to one of claims 4 to 5, characterized in that the continuous change in angle of each radial boundary surface relative to the longitudinal axes of the respective pipes (4, 5) is uniform.

7. A pipe connector according to one of claims 1 to 6, characterized in that the radial boundary surfaces and the longitudinal axes enclose angles of 10 to 40°.

8. A pipe connector according to one of claims 1 to 7, characterized in that the inner supporting surface of the base body (3) is extended in the direction of the end face (7) of the inner pipe (5), and that the part (8) projecting axially beyond the frusto-conical ring, before the pipe (5) is inserted, has an inside diameter which is smaller than the outside diameter of the pipe (5) .

9. A pipe connector according to claim 8, characterized in that the projecting part (8) is designed as an annular diaphragm.

10. A pipe connector according to claim 9, characterised in that the annual diaphragm and the base body (1) merge into one another with uniformly increasing wall thickness.

11. A pipe connector according to one of claims 1 to 10, characterized in that the outer supporting surface (3) of the base body (1) is extended in the direction of the end face (6) of the outer pipe (4), and that the part projecting axially beyond the frusto-conical ring (2), before insertion into the pipe (4), has an outside diameter which is larger than the inside diameter of the pipe (4).

12. A pipe connector according to claim 11, characterized in that the extension (9) of the outer supporting surface is designed as a beading.

**Revendications**

1. Raccord étanche et résistant à la traction en vue de raccorder les extrémités de deux tubes (4, 5) s'entourant mutuellement à une distance radiale, au moyen d'un anneau d'étanchéité comportant un corps de base (1) en une matière première élastique, souple et non compressible venant s'appliquer sur les tubes (4, 5), ainsi qu'un anneau conique (2) en une matière première inflexible enrobé dans ce corps de base, qui est délimité dans le sens radial vers l'intérieur et vers l'extérieur par des surfaces coniques, lesquelles sont inclinées dans le même sens, caractérisé en ce que le corps de base (1) vient s'appliquer sur les tubes (4, 5) avec des surfaces d'appui de forme cylindrique (3); l'anneau conique (2) est essentiellement inflexible et les surfaces coniques délimitant l'anneau conique (2) sont écartées de la surface de chacun des tubes opposés (4, 5) d'une distance diminuant constamment à mesure qu'elles s'éloignent des faces frontales (6, 7) de ces tubes.

2. Raccord de tubes selon la revendication 1, caractérisé en ce que la surface conique extérieure radiale de l'anneau conique (2) inclut, avec l'axe longitudinal des tubes (4, 5), un angle plus petit que la surface conique intérieure radiale.

3. Raccord de tubes selon la revendication 1, caractérisé en ce que les surfaces coniques extérieure et intérieure de l'anneau conique (2) s'étendent parallèlement.

4. Raccord de tubes selon une des revendications 1 à 3, caractérisé en ce que l'angle formé entre la surface conique extérieure radiale et/ou la surface conique intérieure radiale de l'anneau conique (2) et la portée longitudinale des tubes (4, 5) augmente de manière continue à mesure qu'il s'éloigne des faces frontales (6, 7) de ces tubes.

5. Raccord de tubes selon une des revendications 1 à 3, caractérisé en ce que l'angle formé entre la surface conique extérieure radiale et/ou la surface conique intérieure radiale de l'anneau conique (2) et la portée longitudinale des tubes (4, 5) diminue de manière continue à mesure qu'il s'éloigne des faces frontales (6, 7) de ces tubes.

6. Raccord de tubes selon une des revendications 4 et 5, caractérisé en ce que le changement d'angle continu de chacune des surfaces radiales de délimitation par rapport à la portée longitudinale des tubes (4, 5) est régulier.

7. Raccord de tubes selon une des revendications 1 à 6, caractérisé en ce que les surfaces radiales de délimitation et les axes longitudinaux incluent un angle de 10 à 40°.

8. Raccord de tubes selon une des revendications 1 à 7, caractérisé en ce que la surface d'appui intérieure du corps de base (3) est prolongée en direction de la face frontale (7) du tube intérieur (5) tandis que, avant l'introduction du tube (5), la partie (8) ressortant axialement en saillie au-delà de l'anneau conique, a un diamètre intérieur qui est plus petit que le diamètre extérieur de ce tube (5).

9. Raccord de tubes selon la revendication 8, caractérisé en ce que la partie (8) ressortant en saillie est réalisée sous forme d'une membrane annulaire.

10. Raccord de tubes selon la revendication 9, caractérisé en ce que la membrane annualaire et le corps de base (1) viennent se confondre l'un dans l'autre avec une épaisseur de paroi augmentant régulièrement.

11. Raccord de tubes selon une des revendications 1 à 10, caractérisé en ce que la surface d'appui extérieure (3) du corps de base (1) est prolongée en direction de la face frontale (6) du tube extérieur (4) tandis que, avant son introduction dans le tube (4), la partie ressortant axialement en saillie au-delà de l'anneau conique (2) a un diamètre extérieur qui est plus grand que le diamètre intérieur du tube (4)

12. Raccord de tubes selon la revendication 11, caractérisé en ce que le prolongement (9) de la surface d'appui extérieure est réalisé sous forme d'un bourrelet.

**Fig.1**

Fig. 2

Fig. 3

Fig. 4

Fig. 5

Fig. 6

11

Fig. 7